# FASCICULE DE BREVET EUROPEEN

(11) **EP 3 507 139 B1**
(45) Date de publication et mention de la délivrance du brevet: **08.07.2020**
(21) Numéro de dépôt: 17768489.1
(22) Date de dépôt: 23.08.2017
(51) Int. Cl.: B60Q 1/04

(54) **DISPOSITIF DE RÉPARATION À FIXATION INVISIBLE, POUR UN BLOC OPTIQUE USAGÉ DE VÉHICULE**
REPARATURVORRICHTUNG MIT UNSICHTBARER BEFESTIGUNG FÜR EINE BESCHÄDIGTE OPTISCHE EINHEIT EINES FAHRZEUGS
REPAIR DEVICE WITH INVISIBLE ATTACHMENT, FOR A DAMAGED OPTICAL UNIT OF A VEHICLE

(30) Priorité: 02.09.2016 FR 1658157
(43) Date de publication de la demande: 10.07.2019
(73) Titulaire: PSA Automobiles SA, 78300 Poissy (FR)
(72) Inventeur: JEANNEAU, Clément, 92100 Boulogne Billancourt (FR); JAUBERTHIE, Eric, 78390 Bois D'Arcy (FR); MOLTO, Valerie, 78000 Versailles (FR)
(86) Numéro de dépôt international: PCT/FR2017/052268
(87) Numéro de publication internationale: WO 2018/042109

(56) Documents cités:
- JP-A- 2006 103 454
- US-A1- 2002 145 881
- US-B1- 6 257 749

## Description

L'invention concerne les blocs optiques de véhicule qui comprennent un boîtier muni d'au moins une patte de fixation.

Certains véhicules, généralement de type automobile, comprennent des blocs optiques comportant un boîtier muni d'au moins une patte de fixation ayant des première et seconde parties et une zone d'affaiblissement. La première partie est solidarisée fixement au boîtier, en faisant généralement partie intégrante de ce dernier. La seconde partie est solidarisée au véhicule. La zone d'affaiblissement est intercalée entre les première et seconde parties, et est propre à se casser lorsque son bloc optique subit un choc, afin d'augmenter la probabilité qu'il demeure intact (à l'exception de sa patte de fixation). Lorsque seule la patte de fixation est cassée, le bloc optique peut être réutilisé moyennant le couplage d'un dispositif de réparation à la première partie restante de la patte de fixation de son boîtier, laquelle comprend à cet effet au moins un trou muni d'un filetage interne. Chaque trou s'étend habituellement sensiblement verticalement, c'est-à-dire suivant une direction qui est sensiblement perpendiculaire aux faces supérieure et inférieure du boîtier, et débouche au niveau de cette face supérieure.

Les dispositifs de réparation connus comprennent une pièce comprenant une partie principale propre à être solidarisée au véhicule et prolongée sur un côté par une paroi destinée à être placée en regard de la face supérieure de la première partie de la patte de fixation cassée. Cette paroi comprend au voisinage de la partie principale une zone d'affaiblissement propre à se casser en cas de nouveau choc subi par le bloc optique, et au moins un trou propre à être placé devant un trou associé de la première partie de la patte de fixation. Une vis est introduite verticalement, du haut vers le bas, dans chaque trou de la paroi, puis vissée dans chaque trou fileté associé de la première partie de la patte de fixation afin de permettre la solidarisation de la pièce à la patte de fixation.

On connait, notamment du document US6257749A, un tel dispositif de ce type par ailleurs conforme au préambule de la revendication 1.

Un inconvénient de ce type de dispositif de réparation réside dans le fait que les têtes des vis sont situées du côté de la face supérieure du boîtier et donc sont apparentes lorsque l'on soulève le capot du véhicule. Cette visibilité des vis étant caractéristique de l'utilisation d'un dispositif de réparation sur une patte de fixation cassée, elle peut faire craindre que le reste du bloc optique a été au moins partiellement endommagé. En outre cela peut également faire craindre que le véhicule a subi un choc qui a induit l'endommagement de son bloc optique.

L'invention a donc notamment pour but d'améliorer la situation.

Elle propose notamment à cet effet un dispositif de réparation destiné à équiper un bloc optique propre à équiper un véhicule qui se caractérise par la partie caractérisante de la revendication 1.

Grâce à ce masquage de chaque vis et de chaque second trou au niveau de la face supérieure du boîtier, il n'est pas possible de savoir que la partie de fixation du bloc optique appartient à un dispositif de réparation.

Le dispositif de réparation selon l'invention peut comporter d'autres caractéristiques qui peuvent être prises séparément ou en combinaison, et notamment :
- la partie d'ancrage peut comprendre deux seconds trous propres à être placés respectivement devant deux premiers trous associés pour permettre le passage de deux vis ;
- chaque vis peut être propre à être introduite dans un second trou du côté de la face d'extrémité, puis vissée dans un filetage interne que comprend un premier trou associé de la première partie de la patte de fixation, afin de permettre la solidarisation de la pièce à la patte de fixation ;
- dans un premier mode de réalisation, la partie d'ancrage peut comprendre une paroi propre à prolonger la première partie au niveau de la face supérieure du boîtier en direction de la partie principale, afin de masquer chaque extrémité de vis et chaque second trou ;
- dans un second mode de réalisation, la partie de liaison peut prolonger la partie principale sur un côté supérieur afin de passer au-dessus de chaque extrémité de vis et ainsi masquer cette dernière et chaque second trou ;
- sa pièce peut être réalisée par moulage dans un matériau plastique.

L'invention propose également un bloc optique destiné à équiper un véhicule et comprenant un boîtier comportant, d'une part, au moins une patte de fixation munie d'une première partie comprenant au moins un premier trou débouchant sur une face d'extrémité intersectant des faces supérieure et inférieure, et, d'autre part, un dispositif de réparation du type de celui présenté ci-avant et solidarisé à la première partie de la patte de fixation.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus pour le premier d'entre eux en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue du dessus, un exemple de réalisation d'un bloc optique ayant une patte de fixation non endommagée,
- la figure 2 illustre schématiquement et fonctionnellement, dans une vue en coupe dans le plan des premiers trous, une petite partie du boîtier du bloc optique de la figure 1 à laquelle est solidarisée la patte de fixation non endommagée, et
- la figure 3 illustre schématiquement et fonctionnellement, dans une vue en coupe dans le plan des premiers trous, la petite partie du boîtier du bloc optique de la figure 1 à laquelle est solidarisée la première partie de la patte de fixation endommagée et munie d'un exemple de réalisation d'un dispositif de réparation selon l'invention.

L'invention a notamment pour but de proposer un dispositif de réparation DR destiné à équiper un bloc optique BO usagé et propre à équiper un véhicule.

On entend ici par « bloc optique usagé » un bloc optique ayant au moins une patte de fixation PF cassée, par exemple en raison d'un choc subi.

Par ailleurs, on entend ici par « bloc optique » un équipement de véhicule assurant au moins une fonction photométrique (d'éclairage, de signalisation ou de décoration). Par conséquent, il pourra s'agir d'un phare (ou projecteur avant).

On considère dans ce qui suit, à titre d'exemple non limitatif, que le bloc optique BO est destiné à équiper un véhicule de type automobile, comme par exemple une voiture. Mais l'invention n'est pas limitée à ce type de véhicule. Elle concerne en effet tout type de véhicule comportant au moins un bloc optique.

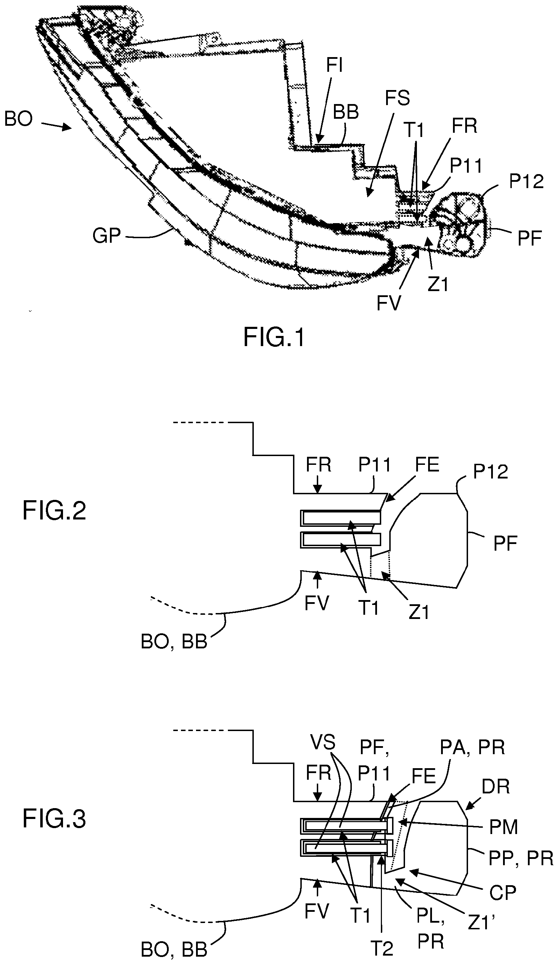

On a schématiquement illustré sur la figure 1 un exemple de bloc optique BO ayant une patte de fixation PF non endommagée. On notera que dans cet exemple le bloc optique BO est un phare (ou projecteur avant). Mais il pourrait également s'agir d'un feu arrière.

Comme illustré, ce bloc optique BO comprend notamment un boîtier BB et une glace de protection GP.

La glace de protection GP est réalisée dans un matériau au moins partiellement transparent, comme par exemple du verre ou une matière plastique ou synthétique, et éventuellement teinté.

Le boîtier BB est réalisé dans un matériau rigide, comme par exemple une matière plastique ou synthétique. Dans ce cas, il peut être réalisé par moulage. Ce boîtier BB délimite une cavité logeant des moyens définissant au moins une fonction photométrique d'éclairage, de signalisation ou de décoration.

Par ailleurs, le boîtier BB comprend une face supérieure FS et une face inférieure FI. La face supérieure FS est par exemple destinée à être orientée vers la face interne du capot du véhicule. C'est donc celle qui est visible lorsque l'on ouvre ce capot. La face inférieure FI est opposée à la face supérieure FS et donc invisible lorsque l'on ouvre le capot.

De plus, et comme cela apparaît mieux sur la figure 2, le boîtier BB comporte au moins une patte de fixation PF munie de première P11 et seconde P12 parties, et d'une première zone d'affaiblissement Z1.

La première partie P11 est solidarisée fixement au boîtier BB du côté de la face avant FV et comprend au moins un premier trou T1 dont on comprendra l'utilité plus loin. Chaque premier trou T1 débouche sur une face d'extrémité FE qui intersecte les faces supérieure FS et inférieure FI du boîtier BB. Par conséquent, chaque premier trou T1 peut être ici considéré comme ayant son axe central contenu dans un plan sensiblement horizontal compris entre les faces supérieure FS et inférieure FI. De plus, chaque premier trou T1 comprend un filetage interne (ou taraudage), qui peut être rapporté (comme illustré non limitativement) ou bien défini dans la masse. Ainsi, chaque premier trou T1 constitue ce que l'homme de l'art appelle fréquemment un fût fileté.

La seconde partie P12 est propre à être solidarisée au véhicule, par exemple par vissage.

La première zone d'affaiblissement Z1 est intercalée entre les première P11 et seconde P12 parties et propre à se casser en cas de choc subi par le bloc optique BO. On comprendra qu'en cas de choc, la patte de fixation PF se casse au niveau de sa première zone d'affaiblissement Z1, dans le prolongement de la face d'extrémité FE de sa première partie P11, et donc après ce choc elle ne comprend plus que sa première partie P11. On appelle donc ici « bloc optique usagé (ou endommagé) » le bloc optique BO avec sa patte de fixation PF qui ne comprend plus que sa première partie P11 se terminant au niveau de sa face d'extrémité FE.

L'invention est destinée à permettre la réutilisation du bloc optique BO usagé dans un véhicule, grâce à la solidarisation d'un dispositif de réparation DR à la première partie P11 de sa patte de fixation PF cassée.

Comme illustré non limitativement sur la figure 3, un dispositif de réparation DR, selon l'invention, comprend au moins une pièce PR comportant une partie principale PP, une partie de liaison PL et une partie d'ancrage PA.

Cette pièce PR est de préférence monobloc. Dans ce cas, elle peut, par exemple, être réalisée par moulage dans un matériau plastique. Ce dernier peut, par exemple, être un polypropylène (ou PP), comme par exemple le PP TD40.

La partie principale PP est propre à être solidarisée à un élément du véhicule, par exemple par vissage. Elle est destinée à remplacer la seconde partie P12 manquante de la patte de fixation PF. Cette partie principale PP est prolongée sur un côté CP par la partie de liaison PL.

Dans l'exemple illustré non limitativement sur la figure 3, la partie principale PP est prolongée par la partie de liaison PL sur le côté CP qui est situé du côté de la face avant FV du boîtier BB. Mais ce côté CP pourrait être un côté supérieur, comme on le verra plus loin.

La partie de liaison PL est munie d'une zone d'affaiblissement Z1' qui est propre à se casser en cas de choc subi par le bloc optique BO. Elle est destinée à se substituer à la zone d'affaiblissement Z1 de la patte de fixation PF initiale, afin d'assurer un rôle identique.

Cette zone d'affaiblissement Z1' peut être agencée de différentes manières. Ainsi, il peut, par exemple, s'agir d'une zone qui présente une épaisseur de matière strictement inférieure à celle d'une zone voisine. On entend ici par « zone voisine » une zone qui est située juste à côté (ou dans le prolongement) d'une zone d'affaiblissement Z1'. Cette différence d'épaisseur peut, par exemple, résulter du moule utilisé pour réaliser la pièce PR. En variante, la zone d'affaiblissement Z1' peut résulter de la définition de trous traversants placés les uns à la suite des autres et/ou les uns à côté des autres.

La partie d'ancrage PA prolonge la partie de liaison PL en direction de la face d'extrémité FE de la première partie P11. Cette partie d'ancrage PA est destinée à être placée contre la face d'extrémité FE, comprend au moins un second trou T2 propre à être placé devant un premier trou T1 associé de la première partie P11 pour permettre le passage d'une vis VS propre à solidariser la pièce PR à la première partie P11, et propre à être en partie placée au-dessus d'une extrémité (ou tête) de cette vis VS afin de masquer cette dernière et chaque second trou T2.

On notera que dans l'exemple illustré non limitativement sur la figure 1, la première partie P11 de la patte de fixation PF comprend deux premiers trous T1. Par conséquent, la partie d'ancrage PA comprend ici deux seconds trous T2 destinés à être associés respectivement aux deux premiers trous T1. Mais la première partie P11 de la patte de fixation PF pourrait ne comprendre qu'un seul premier trou T1 ou bien plus de deux premiers trous T1, et par exemple trois ou quatre. Ce qu'il faut donc retenir c'est que le nombre de seconds trous T2 est égal au nombre de premiers trous T1 et donc au nombre de vis VS.

Chaque vis VS peut être introduite dans un second trou T2 de la partie d'ancrage PA du côté de la face d'extrémité FE, puis vissée dans le filetage interne du premier trou (ou fût) T1 associé de la première partie P11 de la patte de fixation PF, afin de permettre la solidarisation de la pièce PR à la patte de fixation PF. Dans ce cas, la tête de chaque vis VS est située devant la face d'extrémité FE contre la paroi de la partie d'ancrage PA.

Chaque tête de vis VS et chaque second trou T2 étant désormais masqués au niveau de la face supérieure FS du boîtier BB, lorsque l'on soulève le capot du véhicule il n'est pas possible de savoir que la partie de fixation du bloc optique BO (ici PP) appartient à un dispositif de réparation DR. En d'autres termes, la fixation du dispositif de réparation DR étant invisible, il n'est pas possible de savoir que la patte de fixation PF a été cassée et que sa partie restante P11 a été couplée à un dispositif de réparation DR via des vis VS.

Dans l'exemple de réalisation illustré non limitativement sur la figure 3, la partie d'ancrage PA comprend une paroi de masquage PM matérialisée en pointillés du fait qu'elle est placée au-dessus du plan de coupe. Cette paroi de masquage PM est propre à prolonger la première partie P11 au niveau de la face supérieure FS du boîtier BB en direction de la partie principale PP, afin de masquer chaque extrémité (ou tête) de vis VS et chaque second trou T2. Cet agencement résulte du fait que la partie de liaison PL prolonge la partie principale PP sur un côté CP situé du côté de la face avant FV du boîtier BB, et donc qu'elle (PL) ne peut pas assurer le masquage des têtes de vis VS et seconds trous T2, ce qui est alors assuré par la paroi de masquage PM.

Mais dans une variante de réalisation non illustrée, la partie de liaison PL pourrait prolonger la partie principale PP sur un côté supérieur (situé sensiblement au niveau de la face supérieure FS). Dans ce cas, la partie de liaison PL passe au-dessus des têtes de vis TS et donc masque ces dernières ainsi que les seconds trous T2, sans qu'il faille prévoir une paroi de masquage complémentaire.

On notera que la première partie P11 de la patte de fixation PF peut éventuellement comprendre au moins un trou auxiliaire débouchant sur la face inférieure FI et donc défini sensiblement perpendiculairement à chaque premier trou T1. Dans ce cas, ce trou auxiliaire comprend préférentiellement un filetage interne (ou taraudage) destiné à permettre le vissage d'une vis auxiliaire traversant un troisième trou défini dans une protubérance de la partie de liaison PL ou de la partie d'ancrage PA qui s'étend sous la face inférieure FI de la première partie P11. Cette vis auxiliaire, qui est placée sensiblement perpendiculairement aux vis VS, permet d'améliorer la solidarisation de la pièce PR à la patte de fixation PF cassée.

## Revendications

1. Dispositif de réparation (DR) pour un bloc optique (BO) destiné à équiper un véhicule et comprenant un boîtier (BB) comportant au moins une patte de fixation (PF) comprenant une première partie (P11) comportant au moins un premier trou (T1) débouchant sur une face d'extrémité (FE) intersectant des faces supérieure (FS) et inférieure (FI) de ladite première partie (P11), lorsque le dispositif de réparation (DR) et le bloc optique (BO) sont montés sur le véhicule, **caractérisé en ce qu'**il comprend une pièce (PR) comprenant une partie principale (PP) propre à être solidarisée audit véhicule et prolongée sur un côté (CP) par une partie de liaison (PL) munie d'une zone d'affaiblissement (Z1') propre à se casser en cas de choc subi par ledit bloc optique (BO) et prolongée par une partie d'ancrage (PA) destinée à être placée contre ladite face d'extrémité (FE), ladite partie d'ancrage (PA) comprenant au moins un second trou (T2) propre à être placé devant ledit au moins un premier trou (T1) associé pour permettre le passage d'une vis (VS) propre à solidariser ladite pièce (PR) à ladite première partie (P11), l'une desdites partie d'ancrage (PA) et partie de liaison (PL) étant en outre destinée à être en partie placée au-dessus d'une extrémité de la vis afin de masquer cette dernière et ledit au moins un second trou (T2).

2. Dispositif selon la revendication 1, **caractérisé en ce que** ladite partie d'ancrage (PA) comprend deux seconds trous (T2) destinés à être placés respectivement devant deux premiers trous (T1) associés pour permettre le passage de deux vis (VS).

3. Dispositif selon l'une des revendications 1 et 2, **caractérisé en ce que** chaque vis (VS) est propre à être introduite dans le second trou associé (T2) du côté de ladite face d'extrémité (FE), puis vissée dans un filetage interne que comprend le premier trou (T1) associé de ladite première partie (P11) de la patte de fixation (PF), afin de permettre la solidarisation de ladite pièce (PR) à ladite patte de fixation (PF).

4. Dispositif selon l'une des revendications 1 à 3, **caractérisé en ce que** ladite partie d'ancrage (PA) comprend une paroi (PM) propre à prolonger ladite première partie (P11) au niveau de ladite face supérieure (FS) du boîtier (BB) en direction de ladite partie principale PP, afin de masquer chaque extrémité de vis (VS) et chaque second trou (T2).

5. Dispositif selon l'une des revendications 1 à 3, **caractérisé en ce que** ladite partie de liaison (PL) prolonge ladite partie principale (PP) sur un côté supérieur afin de passer au-dessus de chaque extrémité de vis (TS) et ainsi masquer cette dernière et chaque second trou (T2).

6. Dispositif selon l'une des revendications 1 à 5, **caractérisé en ce que** ladite pièce (PR) est réalisée par moulage dans un matériau plastique.

7. Bloc optique (BO) destiné à équiper un véhicule et comprenant un boîtier (BB) comportant au moins une patte de fixation (PF) munie d'une première partie (P11) comprenant au moins un premier trou (T1) débouchant sur une face d'extrémité (FE) intersectant des faces supérieure (FS) et inférieure (FI) de ladite première partie (P11), lorsque le bloc optique (BO) est monté sur le véhicule, **caractérisé en ce qu'**il comprend en outre un dispositif de réparation (DR) selon l'une des revendications précédentes et solidarisé à ladite première partie (P11).

8. Véhicule, **caractérisé en ce qu'**il comprend au moins un bloc optique (BO) selon la revendication 7.

9. Véhicule selon la revendication 8, **caractérisé en ce qu'**il est de type automobile.

## Patentansprüche

1. Reparaturvorrichtung (DR) für eine optische Einheit (BO), die dazu bestimmt ist, ein Fahrzeug auszurüsten, und die ein Gehäuse (BB) mit mindestens einer Befestigungslasche (PF) aufweist, die ein erstes Teil (P11) mit mindestens einem ersten Loch (T1) aufweist, das in eine Endfläche (FE) mündet, die die obere (FS) und untere (FI) Fläche des ersten Teils (P11) schneidet, wenn die Reparaturvorrichtung (DR) und die optische Einheit (BO) am Fahrzeug montiert sind, **dadurch gekennzeichnet, dass** sie ein Teil (PR) umfasst, das ein Hauptteil (PP) umfasst, das dazu bestimmt ist, an dem Fahrzeug befestigt zu werden, und auf einer Seite (CP) durch ein Verbindungsteil (PL) verlängert ist, das mit einer Schwächungszone (Z1') versehen ist, die dazu bestimmt ist, im Falle eines Aufpralls auf den optischen Block (BO) zu brechen, und durch ein Verankerungsteil (PA) verlängert ist, das dazu bestimmt ist, gegen die Endfläche (FE) angeordnet zu werden, wobei das Verankerungsteil (PA) mindestens ein zweites Loch (T2) aufweist, das geeignet ist, vor dem mindestens einen zugehörigen ersten Loch (T1) angeordnet zu werden, um den Durchgang einer Schraube (VS) zu ermöglichen, die geeignet ist, das Teil (PR) an dem ersten Teil (P11) zu befestigen, wobei eines des Verankerungsteils (PA) und des Verbindungsteils (PL) außerdem dazu bestimmt ist, teilweise über einem Ende der Schraube angeordnet zu werden, um letztere und das mindestens eine zweite Loch (T2) zu verdecken.

2. Vorrichtung nach Anspruch 1, **dadurch gekennzeichnet, dass** das genannte Verankerungsteil (PA) zwei zweite Löcher (T2) aufweist, die dazu bestimmt sind, jeweils vor zwei zugehörigen ersten Löchern (T1) angeordnet zu werden, um den Durchgang von zwei Schrauben (VS) zu ermöglichen.

3. Vorrichtung nach einem der Ansprüche 1 und 2, **dadurch gekennzeichnet, dass** jede Schraube (VS) geeignet ist, in das zugehörige zweite Loch (T2) auf der Seite der genannten Endfläche (FE) eingeführt und dann in ein Innengewinde geschraubt zu werden, das das zugehörige erste Loch (T1) des genannten ersten Teils (P11) der Befestigungslasche (PF) aufweist, um die Befestigung des genannten Teils (PR) an der genannten Befestigungslasche (PF) zu ermöglichen.

4. Vorrichtung nach einem der Ansprüche 1 bis 3, **dadurch gekennzeichnet, dass** der Verankerungsteil (PA) eine Wand (PM) aufweist, die geeignet ist, den ersten Teil (P11) auf der Oberseite (FS) des Gehäuses (BB) in Richtung des Hauptteils (PP) zu verlängern, um jedes Schraubenende (VS) und jedes zweite Loch (T2) zu verdecken.

5. Vorrichtung nach einem der Ansprüche 1 bis 3, **dadurch gekennzeichnet, dass** der Verbindungsabschnitt (PL) den Hauptabschnitt (PP) auf einer Oberseite so verlängert, dass er über jedes Schraubenende (TS) verläuft und dadurch das letztere und jedes zweite Loch (T2) abdeckt.

6. Vorrichtung nach einem der Ansprüche 1 bis 5, **dadurch gekennzeichnet, dass** das Teil (PR) durch Formen in einem Kunststoffmaterial hergestellt ist.

7. Optischer Block (BO), der dazu bestimmt ist, ein Fahrzeug auszurüsten, und der ein Gehäuse (BB) aufweist, das mindestens eine Befestigungslasche (PF) aufweist, die mit einem ersten Teil (P11) versehen ist, das mindestens ein erstes Loch (T1) aufweist, das in eine Endfläche (FE) mündet, die die obere (FS) und die untere (FI) Fläche des ersten Teils (P11) schneidet, wenn die optische Einheit (BO) an dem Fahrzeug montiert ist, **dadurch gekennzeichnet, dass** sie außerdem eine Reparaturvorrichtung (DR) gemäß einem der vorhergehenden Ansprüche umfasst, die mit dem ersten Teil (P11) fest verbunden ist.

8. Fahrzeug, **dadurch gekennzeichnet, dass** es mindestens einen optischen Block (BO) nach Anspruch 7 umfasst.

9. Ein Fahrzeug nach Anspruch 8, **dadurch gekennzeichnet, dass** es vom Automobiltyp ist.

## Claims

1. Repair device (DR) for an optical unit (BO) intended to equip a vehicle and comprising a housing (BB) having at least one fixing lug (PF) comprising a first part (P11) having at least one first hole (T1) opening onto an end face (FE) intersecting upper (FS) and lower (FI) faces of said first part (P11), when the repair device (DR) and the optical unit (BO) are mounted on the vehicle, **characterised in that** it comprises a part (PR) comprising a main part (PP) adapted to be secured to said vehicle and extended on one side (CP) by a connecting part (PL) provided with a weakening zone (Z1') adapted to break in the event of an impact to said optical block (BO) and extended by an anchoring part (PA) intended to be placed against said end face (FE), said anchoring part (PA) comprising at least one second hole (T2) suitable for being placed in front of said at least one associated first hole (T1) to allow the passage of a screw (VS) suitable for securing said part (PR) to said first part (P11), one of said anchoring part (PA) and connecting part (PL) furthermore being intended to be partly placed above one end of the screw in order to mask the latter and said at least one second hole (T2).

2. Device according to claim 1, **characterized in that** said anchoring part (PA) comprises two second holes (T2) intended to be placed respectively in front of two associated first holes (T1) to allow the passage of two screws (VS).

3. Device according to one of claims 1 and 2, **characterized in that** each screw (VS) is suitable for being introduced into the associated second hole (T2) on the side of said end face (FE), then screwed into an internal thread which the associated first hole (T1) of said first part (P11) of the fixing lug (PF) comprises, in order to allow the securing of said part (PR) to said fixing lug (PF).

4. Device according to one of claims 1 to 3, **characterized in that** said anchoring part (PA) comprises a wall (PM) capable of extending said first part (P11) at said upper face (FS) of the casing (BB) towards said main part (PP), in order to mask each screw end (VS) and each second hole (T2).

5. A device according to one of claims 1 to 3, **characterized in that** said connecting portion (PL) extends said main portion (PP) on an upper side so as to pass over each screw end (TS) and thereby mask the latter and each second hole (T2).

6. A device according to one of claims 1 to 5, **characterized in that** said part (PR) is made by moulding in a plastic material.

7. Optical block (BO) intended to equip a vehicle and comprising a housing (BB) having at least one fixing lug (PF) provided with a first part (P11) comprising at least one first hole (T1) opening onto an end face (FE) intersecting the upper (FS) and lower (FI) faces of said first part (P11), when the optical unit (BO) is mounted on the vehicle, **characterised in that** it further comprises a repair device (DR) according to one of the preceding claims and integral with said first part (P11).

8. Vehicle, **characterised in that** it comprises at least one optical block (BO) according to claim 7.

9. A vehicle according to claim 8, **characterised in that** it is of the automobile type.
